(19) Europäisches Patentamt
European Patent Office
Office européen des brevets

(11) EP 0 250 601 B2

(12) NEW EUROPEAN PATENT SPECIFICATION

(45) Date of publication and mention of the opposition decision:
**02.07.2003 Bulletin 2003/27**

(45) Mention of the grant of the patent:
**26.02.1992 Bulletin 1992/09**

(21) Application number: **87900280.6**

(22) Date of filing: **25.12.1986**

(51) Int Cl.$^7$: **C08F 4/60**, C08F 10/00

(86) International application number:
**PCT/JP86/00650**

(87) International publication number:
**WO 87/003887 (02.07.1987 Gazette 1987/14)**

# (54) CATALYST FOR POLYMERIZATION OF ALPHA-OLEFINS

KATALYSATOR FÜR DIE POLYMERISATION VON ALPHA-OLEFINEN

CATALYSEUR DE POLYMERISATION D'ALPHA-OLEFINES

(84) Designated Contracting States:
**AT DE FR GB IT NL**

(30) Priority: **26.12.1985 JP 29189385**

(43) Date of publication of application:
**07.01.1988 Bulletin 1988/01**

(73) Proprietor: **MITSUI CHEMICALS, INC.**
**Tokyo (JP)**

(72) Inventors:
- **TSUTSUI, Toshiyuki**
**Hiroshima 739-06 (JP)**
- **TOYOTA, Akinori**
**Iwakuni-shi Yamaguchi 740 (JP)**
- **KASHIWA, Norio**
**Iwakuni-shi Yamaguchi 740 (JP)**

(74) Representative: **Cresswell, Thomas Anthony et al**
**J.A. KEMP & CO.**
**14 South Square**
**Gray's Inn**
**London WC1R 5JJ (GB)**

(56) References cited:

| | |
|---|---|
| **EP-A- 0 128 045** | **EP-A- 0 226 663** |
| **EP-A- 0 250 600** | **EP-A- 0 287 666** |
| **US-A- 3 306 919** | **US-A- 4 431 788** |

- **H. Hähnsen, Thesis "Kinetische und mechanistische Untersuchungen zum Ziegler-Natta-Katalysator aus Cyclopentadienylverbindungen des Zirkoniums und Methylaluminoxan", 1985, University of Hamburg**
- **W. Kaminsky, MMI Press Symp., Ser. 4, (Transition Met. Catal. Polym.: Alkenes, Dienes, Pt. A), 1983, pp. 225-244**

Remarks:
The file contains technical information submitted after the application was filed and not included in this specification



Printed by Jouve, 75001 PARIS (FR)

## Description

This invention relates to a catalyst and a process for polymerising an alpha-olefin in the presence of the highly active polymerisation catalyst. More specifically, it relates to a catalyst and a process for producing an alpha-olefin polymer having a narrow molecular weight distribution and/or composition distribution in the presence of a specific transition metal compound and an aluminoxane.

A process has heretofore been known for producing an alpha-olefin copolymer by copolymerising ethylene with an alpha-olefin in the presence of a titanium-type catalyst comprising a titanium compound and an organoaluminum compound or a vanadium-type catalyst comprising a vanadium compound and an organoaluminum compound. US-A-3306919, for example, discloses titanium compounds of the general formula $RTiX_{3-m}Y_m$ where R is an unsubstituted or substituted cyclopentadienyl group, X is a halogen, Y is a different halogen or an alkoxy group and m is 0, 1, 2 or 3. It is possible to use the compounds in conjunction with trialkyl aluminium compounds as polymerisation catalysts for ethylenic hydrocarbons.

Generally, ethylene/alpha-olefin copolymers obtained with the titanium-type catalyst have a broad molecular weight distribution, and a broad composition distribution. Ethylene/alpha-olefin copolymers obtained with the vanadium-type catalyst have a narrower molecular weight distribution and composition distribution then those obtained with the titanium-type catalyst. It is desired to provide in a particular field alpha-olefin polymers, particularly ethylene/alpha-olefin copolymers, having much narrower molecular weight and composition distributions.

Catalysts comprising zirconium compounds and aluminoxanes were recently proposed as a new Ziegler-type olefin polymerisation catalyst.

Japanese Laid-Open Patent Publication No. 19309/1983 (corresponding to US Patent 4542199) discloses a process which comprises polymerising ethylene with at least one alpha-olefin having 3 to 12 carbon atoms at a temperature of -50 to 200°C in the presence of a catalyst comprising a transition metal-containing compound represented by the following formula

$$(\text{cyclopentadienyl})_2\ \text{MeR' Hal}$$

wherein R' represents cyclopentadienyl, $C_1$-$C_6$ alkyl or halogen, Me represents a transition metal, and Hal represents halogen,
and a linear aluminoxane represented by the following formula

$$Al_2OR^2_4\ (Al(R^2)\text{-}O)_n$$

wherein $R^2$ represents methyl or ethyl, and n is a number of 4 to 20,
or a cyclic aluminoxane represented by the following formula

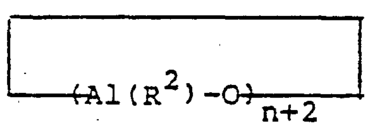

wherein $R^2$ and n are as defined.
This patent document states that to adjust the density of the resulting ethylene copolymer, ethylene should be polymerized in the presence of a small amount (up to 10% by weight) of a slightly long-chain alpha-olefin or alpha-olefin mixture.

Japanese Laid-Open Patent Publication No. 95292/1984 (corresponding to U. S. Patent 4,544,762) describes an invention relating to a process for producing a linear aluminoxane represented by the following formula

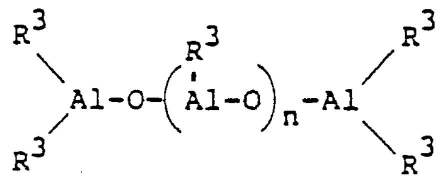

wherein n is 2 to 40 and $R^3$ represents a $C_1$-$C_6$ alkyl group, and a cyclic aluminoxane represented by the following formula

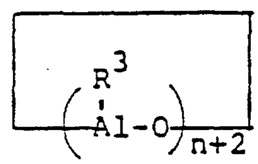

wherein n and $R^3$ are as defined.

This patent document states that when ethylene is polymerized in the presence of a mixture of methylaluminoxane produced by the above process and a titanium or zirconium bis(cyclopentadienyl) compound, polyethylene can be obtained in an amount of at least 25 million grams per gram of the transition metal per hour.

Japanese Laid-Open Patent Publication No. 35005/1985 (corresponding to U. S. Patent 4,536,484) discloses a process for producing an olefin polymerization catalyst, which comprises reacting an aluminoxane compound represented by the following formula

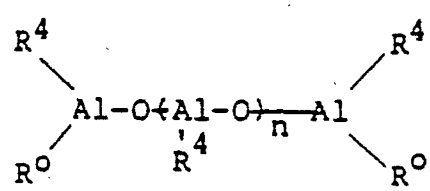

wherein $R^4$ is $C_1$-$C_{10}$ alkyl, and $R^0$ forms together a bivalent -O- radical or represents $R^4$, with a magnesium compound, chlorinating the reaction product, and treating the product with a compound of Ti, V, Zr or Cr. This patent document states that the resulting catalyst is especially suitable for copolymerization of a mixture of ethylene with a $C_3$-$C_{12}$ alpha-olefin.

Japanese Laid-Open Patent Publication No. 35006/1985 (corresponding to European Patent Application No. 128046A) discloses a combination of (a) a mono-, di-or tri-cyclopentadienyl of two or more different transition metals or a derivative thereof and (b) an alumoxane (aluminoxane). Example 1 of this patent document discloses that polyethylene having a number average molecular weight of 15,300 and a weight average molecular weight of 36,400 and containing 3.4% of propylene was obtained by polymerizing ethylene and propylene using bis(pentamethylcyclopentadienyl) zirconium dimethyl and alumoxane. In Example 2, a blend of polyethylene and an ethylene/propylene copolymer having a number average molecular weight of 2,000 and a weight average molecular weight of 8,300 and containing 7.1 mole% of propylene composed of a toluene-soluble portion having a number average molecular weight of 2,200 and a weight average molecular weight of 11,900 and containing 30 mole% of propylene and a toluene-insoluble portion having a number average molecular weight of 3,000 and a weight average molecular weight of 7,400 and containing 4.8 mole% of propylene was obtained by polymerizing ethylene and propylene using bis-(pentamethylcyclopentadienyl) zirconium dichloride, bis(methylcyclopentadienyl) zirconium dichloride and alumoxane as a catalyst. Likewise, Example 3 describes a blend of LLDPE and an ethylene/propylene copolymer composed of a soluble portion having a molecular weight distribution ($\bar{M}w/\bar{M}n$) of 4.57 and containing 20.6 mole% of propylene and an insoluble portion having a molecular weight distribution of 3.04 and containing 2.9 mole% of propylene.

Japanese Laid-Open Patent Publication No. 35007/1985 (corresponding to European Patent Application No. 129368A) discloses a process which comprises polymerizing ethylene alone or with an alpha-olefin having at least 3 carbon atoms in the presence of a catalyst system comprising a metallocene and a cyclic alumoxane represented by

the following formula

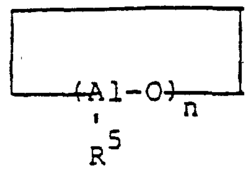

wherein $R^5$ represents an alkyl group having 1 to 5 carbon atoms, and n is an integer of 1 to about 20, or a linear aluminoxane represented by the following formula

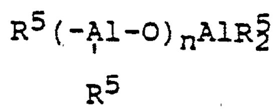

wherein $R^5$ and n are as defined above.
The polymer obtained by this process, according to the description of this patent document, has a weight average molecular weight of about 500 to 1,400,000 and a molecular weight distribution of 1.5 to 4.0.

EP-A-0128045 corresponding to Japanese Laid-Open Patent Publication No. 35008/1985 and US Patent 4,530,914, describes that polyethylene or an ethylene/$C_3$-$C_{10}$ alpha-olefin copolymer having a high molecular weight and a broad molecular weight distribution is produced by using a catalyst system comprising at least two different metallocenes and an aluminoxane, and that this copolymer has a molecular weight distribution of 2 to 50. The metallocenes each have different propagation and termination rate constants for ethylene polymerisation and are preferably mono-, di or tricyclopentadienyl derivatives of a Group 4b, 5b or 6b transition metal.

Japanese Laid-Open Patent Publication No. 35009/1985 (corresponding .to US Patent 4,540,753) discloses a process for producing a copolymer of ethylene and an alpha-olefin having a molecular weight distribution of as small as less than 2 by using a catalyst system comprising a vanadium compound and an organo-aluminum compound.

EP-A-0035242 describes a process for preparing polymers and copolymers of ethylene and other $\alpha$-olefins using a halogen-free Ziegler-type catalyst system comprising a transition metal compound and an alumoxane of general formula $(R\text{-}Al\text{-}O)_m$ in which R is $C_1$-$C_5$ alkyl and m is from 1 to 20. The transition metal compound is of general formula $(Cp)_nMeY_n$ where Cp is a cyclopentadienyl group, Me is a transition metal, n is an integer of 1 to 4 and Y is H, $C_1$-$C_5$ alkyl or metallo-alkyl, or an alkyl aluminium-substituted alkyl group.

The above prior art references suggest that a catalyst system composed of a combination of an aluminoxane and a metallocene compound of a transition metal having an alkadienyl group (e.g., a cyclopentadienyl group), an alkyl group and/or a halogen atom as a ligand has high activity in the polymerisation of alpha-olefins.

It is an object of this invention to provide a process for polymerising an alpha-olefin in the presence of a novel catalyst composed of a transition metal metallocene compound and an aluminoxane.

Another object of this invention is to provide a catalyst comprising a transition metal compound component and an aluminoxane which has good stability against air or moisture and high polymerisation activity.

Still another object of this invention is to provide a process for polymerisig an alpha-olefin, which can give a homopolymer of an alpha-olefin having a narrow molecular weight distribution, and an alpha-olefin-copolymer having a narrow molecular weight distribution and a narrow composition distribution.

Yet another object of this invention is to provide a process for producing an alpha-olefin polymer having a low halogen content.

Further objects and advantages of this invention will become apparent from the following description.

According to this invention, these objects and advantages of this invention are achieved by a process for producing an alpha-olefin polymer, which comprises polymerising an alpha-olefin in the presence of a catalyst which comprises no carrier or support and is obtainable from

(A) a transition metal compound comprising (A-1) a transition metal atom,
(A-2) a ligand containing a heteroatom selected from oxygen, sulfur, nitrogen and phosphorus, through which the ligand is bonded to the transition metal atom (A-1), and
(A-3) a ligand having a conjugated $\pi$ electron through which the ligand is bonded to the transition metal atom (A-1), said transition metal compound (A) optionally having been pretreated with (C) an organometallic compound,

or (D) a halogen-containing inorganic compound of an element of Group III, IV or V of the periodic table, and
(B) an aluminoxane.

The term "polymerization", as used in this invention, means both homopolymerization and copolymerization, and likewise, the term "polymer", as used herein, means both a homopolymer and a copolymer.

The catalyst used in this invention is formed from the transition metal compound (A) and the aluminoxane (B).

The transition metal compound catalyst component (A) comprises (A-1) a transition metal atom, (A-2) a hetero atom-containing ligand containing a hetero atom selected from oxygen, sulfur, nitrogen and phosphorus capable of forming a bond with the transition metal atom, and (A-3) a ligand having a conjugated $\pi$ electron as defined in claim 1.

The transition metal atom (A-1) is preferably titanium or zirconium and zirconium is especially preferred.

Examples of the hetero atom-containing ligand (A-2) are hydrocarbon-oxy groups, hydrocarbon-thio groups, di(hydrocarbon)amino groups, di(hydrocarbon)phosphorus groups and a silyloxy group.

Examples of the cycloalkadienyl group represented by $R^1$ are cyclopentadienyl, methylcyclopentadienyl, ethylcyclopentadienyl, dimethylcyclopentadienyl, indenyl, and tetrahydroindenyl groups.

Examples of the cycloalkadienyl group for $R^3$ and $R^4$ may be the same as given above with regard to $R^1$.

Preferred examples of the aryl group represented by $R^3$ and $R^4$ are phenyl and tolyl groups.

Preferred examples of the aralkyl groups for $R^3$ and $R^4$ are benzyl and neophyl groups.

Examples of the alkyl group for $R^3$ and $R^4$ are methyl, ethyl, propyl, isopropyl, butyl, hexyl, octyl, 2-ethylhexyl, decyl and oleyl groups.

Examples of the halogen atom for $R^3$ and $R^4$ are fluorine, chlorine and bromine atoms.

$R^a$, $R^b$, $R^c$ and $R^d$ may be an alkyl (except in the case of $R^a$) cycloalkyl, aryl or aralkyl group, or a silyl group. Examples of the alkyl, aryl and aralkyl groups may be the same as those given above. Preferably, the cycloalkyl group is, for example, a cyclopentyl or cyclohexyl group. Examples of the silyl group are trimethylsilyl, triethylsilyl, phenyldimethylsilyl, diphenylmethylsilyl and triphenylsilyl groups.

Two $R^c$ groups or two $R^d$ groups may be linked to each other to form a heterocyclic ring, such as a 5-to 7-membered ring, preferably a 6-membered ring, together with a nitrogen atom or a phosphorus atom to which they are bonded.

A compound of formula (I) above in which $R^2$ is $OR^a$, for example a compound of the formula $Cp_2M\text{-}(OR^a)_xCl_{2-x}$ wherein Cp represents a cyclopentadienyl group, can be synthesized by reacting $Cp_2MCl_2$ and a compound represented by $R^aOH$ (an alcohol compound, a silanol compound, etc.) in a solvent such as tetrahydrofuran or toluene in the presence of a tertiary amine such as triethylamine [see, for example, Donald R. Gray et al., Inorganic Chemistry, Volume 10, page 2143 (1971) and H. Suzuki et al., Bulletin of Chemical Society of Japan, Volume 48, page 2460 (1975)].

A compound of formula (I) above in which $R^2$ is $SR^b$, for example a compound represented by $Cp_2M\text{-}(SR^b)_yCl_{2-y}$, can be prepared by reacting $Cp_2MCl_2$ with a compound represented by $R^bSH$ (a thioalcohol compound, a thiophenol compound, etc.) in a solvent such as tetrahydrofuran or toluene in the presence of a tertiary amine [see, for example, E. G. Muller et al., Journal of Organometallic Chemistry, volume 111, page 73 (1976) and H. Koepf, Journal of Organometallic Chemistry, volume 14, 553 (1968)].

A compound of formula (I) in which $R^2$ is $NR^c_2$, for example a compound represented by $Cp_2M(NR^c_2)_zC_{2-z}$, can be prepared by reacting $Cp_2MCl_2$ with a compound represented by $LiNR^c_2$ in a hydrocarbon solvent such as toluene [see, for example, G. Chandra et al., Journal of Chemical Society (A), page 1940, (1968)].

In the above-given formulae, x, y and z are numbers of 1 to 2.

Examples of zirconium compounds corresponding to formula (I) in which M is zirconium include

bis(cyclopentadienyl) phenoxy zirconium chloride,
bis(cyclopentadienyl) cyclohexoxy zirconium chloride,
bis(cyclopentadienyl) phenyl methoxy zirconium chloride,
bis(cyclopentadienyl) methyl zirconium phenyl methoxide,
bis(cyclopentadienyl) trimethylsiloxy zirconium chloride,
bis(cyclopentadienyl) triphenylsiloxy zirconium chloride,
bis(cyclopentadienyl) thiophenyl zirconium chloride,
bis(cyclopentadienyl) thioethyl zirconium chloride,
bis(cyclopentadienyl) bis(dimethylamide) zirconium, and
bis(cyclopentadienyl) diethylamide zirconium chloride.

Examples of titanium compounds corresponding to formula (I) in which M is titanium include

bis(cyclopentadienyl) phenoxy titanium chloride,
bis(cyclopentadienyl) trimethylsiloxy titanium chloride,

bis(cyclopentadienyl) thiophenyl titanium chloride, and
bis(cyclopentadienyl) bis(dimethylamide) titanium.

Example of hafnium compounds corresponding to formula (I) in which M is hafnium include

bis(cyclopentadienyl) phenoxy hafnium chloride,
bis(cyclopentadienyl) thiophenyl hafnium chloride,
and
bis(cyclopentadienyl) bis(diethylamide) hafnium.

The catalyst component (B) is an aluminoxane.

Examples of the aluminoxane are organoaluminum compounds represented by the following formulae (II) and (III)

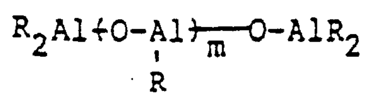 .....(II)

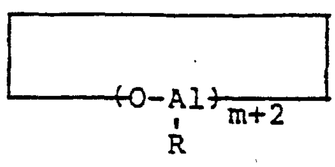 .......(III)

wherein R represents a hydrocarbon group, and m represents a positive integer, preferably an integer of at least 5, especially preferably an integer of 10 to 100.

In formulae (II) and (III), R represents a hydrocarbon group such as an alkyl, cycloalkyl, aryl or aralkyl group. Preferred alkyl groups are lower alkyl groups such as methyl, ethyl, propyl and butyl groups. Cyclopentyl and cyclohexyl groups are preferred as the cycloalkyl groups. The aryl is preferably a phenyl or tolyl group. Examples of preferred aralkyl groups are benzyl and neophyl groups. Among these, the alkyl groups are especially preferred, and the methyl group is most preferred.

In formulae (II) and (III), m is a positive integer, preferably an integer of at least 20, particularly preferably an integer of at least 25, above all an integer of 30 to 100.

The aluminoxane can be produced, for example, by the following methods.

(1) A method which comprises adding a trialkyl aluminum to a suspension of a compound containing water of adsorption or a salt containing water of crystallization, such as magnesium chloride hydrate, copper sulfate hydrate, aluminum sulfate hydrate, nickel sulfate hydrate or cerium chloride hydrate, in a hydrocarbon medium and reacting them.
(2) A method which comprises allowing water to act directly on a trialkyl aluminum in a medium such as benzene, toluene, ethyl ether or tetrahydrofuran.

The method (1) is preferably employed. The aluminoxane may contain a small amount of an organometallic component.

The catalyst used in the process of this invention can be formed by contacting the transition metal compound catalyst component (A) with the catalyst component (B). At this time, the catalyst component (A) may be treated with an organometallic compound (C) and a halogen-containing inorganic compound (D) of an element of Group III, IV or V of the periodic table before it is contacted with the catalyst component (B). This treatment can give a catalyst having higher polymerization activity.

The organometallic compound (C) is preferably an organoaluminum, organoboron, organosilicon, organomagnesium, organozinc or organolithium compound.

Specific examples of the organoaluminum compound which preferably has at least one hydrocarbon group directly bonded to the aluminum atom are trialkyl aluminums such as trimethyl aluminum, triethyl aluminum and tributyl

aluminum; alkenyl aluminums such as isoprenyl aluminum; dialkyl aluminum alkoxides such as dimethyl aluminum methoxide, diethyl aluminum ethoxide and dibutyl aluminum butoxide; alkyl aluminum sesquialkoxides such as methyl aluminum sesquimethoxide and ethyl aluminum sesquiethoxide; partially alkoxylated alkyl aluminums having the average composition of the formula

$$R^1_{2.5}Al(OR^2)_{0.5}$$

wherein $R^1$ and $R^2$ are alkyl groups; dialkyl aluminum halides such as dimethyl aluminum chloride, diethyl aluminum chloride and dimethyl aluminum bromide; alkyl aluminum sesquihalides such as methyl aluminum sesquichloride and ethyl aluminum sesquichloride; and alkyl aluminum dihalides such as methyl aluminum dichloride and ethyl aluminum dichloride.

Trialkylborons such as triethylboron are preferred examples of the organoboron compound which preferably has at least one hydrocarbon group directly bonded to the boron atom.

Preferred organosilicon compounds are those which have at least one halogen atom directly bonded to the silicon atom. Specific examples of such organosilicon compounds are methyltrichlorosilane, chloromethyltrichlorosilane, vinyltrichlorosilane, ethyltrichlorosilane, 1,2-dibromoethyltrichlorosilane, 1,2-dichloroethyltrichlorosilane, 1-chloroethyltrichlorosilane, 2-chloroethyltrichlorosilane, dimethyldichlorosilane, ethyldichlorosilane, methoxytrichlorosilane and ethoxytrichlorosilane.

Examples of the organomagnesium compound preferably having at least one hydrocarbon group directly bonded to the magnesium atom are ethyl butyl magnesium, di-n-hexyl magnesium, ethyl magnesium bromide, phenyl magnesium bromide and benzyl magnesium chloride.

Dialkylzincs such as diethylzinc are preferred examples of the organozinc compound preferably having at least one hydrocarbon group directly bonded to the zinc atoms.

Examples of the organolithium compound preferably having hydrocarbon group directly bonded to the lithium atom are methyllithium, butyllithium and phenyllithium.

Organoaluminum compounds are preferred as the organometallic compound (C).

Examples of the halogen-containing inorganic compound (D) include halogenated silicon compounds such as silicon tetrachloride, silicon tetraiodide and trichlorosilane, halogenated aluminum compounds such as aluminum trichloride and aluminum tribromide, halogenated boron compounds such as boron trichloride and boron tribromide, halogenated titanium compounds such as titanium tetrachloride, titanium tetrabromide and titanium trichloride, halogenated phosphorus compounds such as phosphorus oxychloride, phosphorus pentachioride and phosphorus trichloride, and halogenated vanadium compounds such as vanadium oxytrichloride, vanadium tetrachloride and vanadium trichloride. Of these, the halogenated silicon compounds and the halogenated aluminum compounds are preferred.

The organometallic compound (C) is used in an amount of usually 0.1 to 50 moles, preferably 0.3 to 30 moles, more preferably 0.5 to 20 moles, per mole of the transition metal compound (A) in treating the transition metal compound (A).

The treatment of the catalyst component (A) with the organometallic compound (C) is carried out generally in an organic solvent. Examples of the organic solvent are aliphatic hydrocarbons such as pentane, hexane, heptane, octane, nonane and decane; alicyclic hydrocarbons such as methylcyclopentane, cyclopentane, cyclohexane, cyclooctane, cyclodecane and cyclododecane; and aromatic hydrocarbons such as benzene, toluene, xylene, cumene and cymene. Of these, aromatic hydrocarbons are preferred.

The concentration of the transition metal compound in the treating system is maintained usually at 1 x $10^{-8}$ to 1 gram-atom/liter, preferably 1 x $10^{-7}$ to 0.1 gram-atom/liter, as the transition metal atom.

The concentration of the organometallic compound (C) or the inorganic metal compound (D) in the treating system, calculated as the metal atom, is maintained usually at 1 x $10^{-8}$ to 1 gram-atom/liter, preferably 1 x $10^{-7}$ to 0.1 gram-atom/liter, as the metallic atom.

The treating temperature is usually 0 to 100°C, preferably 10 to 80°C. The time required for the treatment is usually at least 0.1 minute, preferably 1 to 200 minutes.

The transition metal compound (A) treated with the organometallic compound (C) or the inorganic metal compound (D) as above may be used as a solid catalyst by supporting it on a carrier such as silica, alumina or magnesia.

The catalyst used in this invention may be formed in a polymerization reaction vessel before or after introduction of the alpha-olefin.

Preferred examples of the alpha-olefin to be polymerized include alpha-olefins having 2 to 20 carbon atoms such as ethylene, propylene, 1-butene, 4-methyl-1-pentene, 1-hexene, 1-octene, 1-decene, 1-dodecene, 1-tetradecene, 1-hexadecene, 1-octadecene and 1-eicocene. They may be used either singly or in combination. As required, the alpha-olefin may be copolymerized with a polyene such as a diene. The process of this invention is especially preferably applied to the copolymerization of at least two alpha-olesins, such as the copolymerization of ethylene with

an alpha-olefin other than ethylene or to the copolymerization of different alpha-olefins other than ethylene because it gives a copolymer having a narrow composition distribution and a narrow molecular weight distribution.

In the process of this invention, the polymerization of the olefin is carried out usually in a hydrocarbon medium. Specific examples of the hydrocarbon medium include aliphatic hydrocarbons such as butane, isobutane, pentane, hexane, octane, decane, dodecane, hexadecane and octadecane; alicyclic hydrocarbons such as cyclopentane, methylcyclopentane, cyclohexane and cyclooctane; aromatic hydrocarbons such as benzene, toluene and xylene; and petroleum fractions such as gasoline, kerosene and light oils. The starting olefin can also be the hydrocarbon medium.

In practicing the process of this invention, a liquid-phase polymerization technique such as a suspension-polymerization or solution-polymerization technique is employed, but a gas-phase polymerization technique may also be employed. The temperature employed in the polymerization reaction is usually -50 to 230°C, preferably -20 to 200°C.

When the process of this invention is carried out by the liquid-phase polymerization technique, the amount of the transition metal compound (A) is usually $10^{-8}$ to $10^{-2}$ gram-atom/liter, preferably $10^{-7}$ to $10^{-3}$ gram-atom/liter, as the concentration of the transition metal atom, in the polymerization reaction system. The amount of the aluminoxane (B) is usually $10^{-4}$ to $10^{-1}$ gram-atom/liter, preferably $10^{-3}$ to $5 \times 10^{-2}$ gram-atom/liter, as the concentration of the aluminum atom in the polymerization system. The ratio between the aluminum metal atom and the transition metal atom in the polymerization reaction system which are derived from the catalyst components (A) and (B), the Al/transition metal atom, is usually from 25 to $10^7$, preferably from $10^2$ to $10^6$. The molecular weight of the polymer may be controlled by hydrogen and/or the polymerization temperature.

In the process of this invention, the desired alpha-olefin polymer may be obtained by treating the polymerization reaction mixture in a customary manner after the polymerization reaction.

The molecular weight distribution ($\bar{M}w/\bar{M}n$) and the composition distribution (B value) of the polymer obtained by this invention are determined by the following procedures.

The molecular weight distribution ($\bar{M}w/\bar{M}n$) is measured as follows in accordance with Takeuchi, "Gel Permeation Chromatography" published by Maruzen Co., Ltd., Tokyo.

(1) The GPC count of standard polystyrene (monodisperse polystyrene made by Toyo Soda Co., Ltd.) of known molecular weight M is measured, and a calibration curve for the molecular weight M versus the elution volume is drawn. The concentration of standard polystyrene at this time is adjusted to 0.02% by weight.

(2) A gel permeation chromatograph of a sample polymer is taken by GPC measurement. From the calibration curve mentioned in (1) above, the number average molecular weight $\bar{M}_n$ and the weight average molecular weight $\bar{M}_w$ of the sample are calculated. The $\bar{M}_w/\bar{M}_n$ is thus obtained. The conditions for sample preparation and GPC measurement are as follows:

<u>Sample preparation</u>

(a) The sample is put in an Erlenmeyer flask together with o-dichlorobenzene as a solvent so that its concentration becomes 0.1 % by weignt.

(b) The Erlenmeyer flask is heated to 140°C, and the mixture is stirred for about 30 minutes to form a solution.

(c) The polymer solution is subjected to GPC.

<u>GPC measurement</u>

The measurement is conducted under the following conditions.

(a) Device: 150C-ALC/GPC made by Waters Co.

(b) Column: GMH type made by Toyo Soda Co., Ltd., or ZORBAX PSM Bimodal-S made by E. I. Du Pont de Nemours & Co.

(c) Amount of the sample: 400 or 200 microliters

(d) Temperature: 140°C

(e) Flow rate: 1 ml/min.

Furthermore, the ethylenic copolymer of this invention has a B value, defined by the following equation (IV), within the range defined by the following equation (V)

$$B \equiv \frac{P_{OE}}{2P_O \cdot P_E} \qquad (P_O \neq 0) \qquad (IV)$$

wherein $P_E$ represents the molar fraction of the ethylene component in the copolymer, $P_O$ is the molar fraction of the alpha-olefin component in the copolymer, $P_{OE}$ is the molar fraction of alpha-olefin/ethylene chains in the total dyad chains,

$$1.00 \leqq B \leqq 2.$$

The B value is an index showing the state of distribution of the individual monomer components in the copolymer chain, and can be calculated from $P_E$, $P_O$ and $P_{OE}$ which are measured on the basis of G. J. Ray, Macromolecules, 10, 773 (1977), J. C. Randall, Macromolecules, 15, 353 (1982), J. Polymer Science, Polymer Physics Ed., 11, 275 (1973), and K. Kimura, Polymer, 25, 441 (1984).
As the B value is larger, the copolymer has less blocked chains, a more uniform distribution of ethylene and alpha-olefin and a narrower composition distribution.
Preferably, the ethylenic copolymer in accordance with this invention has the following B values.
When the copolymer has an ethylene content of not more than 50 mole%:-

preferably

$$1.0 + 0.3xP_E \leqq B \leqq 1/(1-P_E),$$

more preferably

$$1.0 + 0.4xP_E \leqq B \leqq 1/(1-P_E),$$

especially preferably

$$1.0 + 0.5xP_E \leqq B \leqq 1/(1-P_E).$$

When the copolymer has an ethylene content of more than 50 mole%:-

preferably

$$1.3 - 0.3xP_E \leqq B \leqq 1/P_E,$$

more preferably

$$1.4 - 0.4xP_E \leqq B \leqq 1/P_E$$

especially preferably

$$1.5 - 0.5xP_E \leqq B \leqq 1/P_E.$$

The B value was determined as follows:-
**[0079]** A sample is prepared by uniformly dissolving about 200 mg of the copolymer in 1 ml of hexachlorobutadiene in a sample tube having a diameter of 10 mm. The $^{13}$C-NMR spectrum of the sample is usually measured under the following conditions.

| | |
|---|---|
| Temperature | 120°C |
| Frequency | 25.05 MHz |
| Spectral width | 1500 Hz |
| Filter width | 1500 Hz |
| Pulse repeating time | 4.2 sec |
| Pulse width | 7 microseconds |
| Integration cycles | 2000 to 5000 |

$P_E$, $P_O$ and $P_{OE}$ are determined from the spectrum, and the B value is calculated from these.

The process of this invention can easily give alpha-olefin polymers having a narrow molecular weight distribution and a narrower composition distribution with high catalytic activity.

A copolymer having ethylene units as a major component produced by the present invention provides films having good transparency, low surface tackiness and good mechanical propeties.

This invention also has the advantage that since the halogen content of the catalyst component can be decreased, the halogen content of the resulting alpha-olefin polymer can also be decreased, and that the stability of the catalyst can be incrased.

**Best mode for practicing the invention**

The following examples illustrate the process of this invention more specifically.

EXAMPLE 1

Preparation of a catalyst component (B) (aluminoxane):-

A 200 ml flask purged fully with argon was charged with 5.6 g of $MgCl_2.6H_2O$ and 50 ml of toluene. The mixture was cooled to 0°C and then 100 millimoles of trimethyl aluminum diluted with 50 ml of toluene was added dropwise. Subsequently, the mixture was heated to 70°C, and maintained at this temperature for 80 hours. After the reaction, the reaction mixture was subjected to solid-liquid separation by filtration. Toluene was removed from the separated liquid to obtain methylaluminoxane as a white solid. The methylaluminoxane was used as a solution in toluene in the polymerization described below. The methylaluminoxane had a molecular weight, determined by freezing point depression in benzene, of 1660, and the $\underline{m}$ value shown in the catalyst component (B) corresponded to 27.

Polymerization:-

A 500 ml glass autoclave purged fully with nitrogen was charged with 250 ml of purified toluene, and a gaseous mixture of ethylene and propylene (60 liters/hr and 40 liters/hr respectively) was passed through the autoclave and maintained at 20°C for 10 minutes. Subsequently, 1.25 milligram-atom, as the aluminum atom, of methylaluminoxane [catalyst component (B)] and 1.25 x $10^{-3}$ milligram-atom, as the zirconium atom, of bis(cyclopentadienyl) phenoxy zirconium monochloride [catalyst component (A)] were introduced into the autoclave, and the polymerization of the ethylene/propylene gaseous mixture was started. The polymerization was carried out at 20°C under atmospheric pressure for 1 hour, and then stopped by adding a small amount of isopropanol. The polymer solution was poured into a large amount of methanol to precipitate the resulting polymer. The polymer was dried overnight under reduced pressure at 130°C. After drying the amount of the polymer obtained was 10.0 g, and the activity was 8000 g of polymer/milligram-atom of zirconium. The resulting ethylene/propylene copolymer had an ethylene content of 78.2mole%, an MFR of 0.43 g/10 min., an $\bar{M}w/\bar{M}n$ of 2.05, and a B value of 1.17.

EXAMPLE 2

Example 1 was repeated except that in the polymerization of Example 1, 200 ml of toluene and 50 ml of 1-hexene were introduced into the autoclave, and while ethylene was passed through it at a rate of 100 liters/hr, 2.5 x $10^{-4}$ milligram-atom, as the zirconium atom, of bis(cyclopentadienyl) phenoxy zirconium monochloride and 1.25 milligram-atom, as the aluminum atom, of the methylaluminoxane synthesized in Example 1 were added, and that the polymerization was carried out at 60°C for 0.5 hour. There was obtained 10.5 g of an ethylene/1-hexene copolymer having an MFR of 0.65 g/10 min., a density of 0.922 g/$cm^3$ and an $\bar{M}w/\bar{M}n$ of 2.15. The activity was 42,000 g of polymer/milligram-atom of zirconium.

EXAMPLE 3

Example 1 was repeated except that bis(cyclopentadienyl) thiophenyl zirconium monochloride was used instead of bis(cyclopentadienyl) phenoxy zirconium monochloride, and the polymerization time was changed to 0.5 hour. There was obtained 11.3 g of an ethylene/propylene copolymer having an ethylene content of 78.6 mole%, an MFR of 1.15 g/10 min., an $\overline{M}w/\overline{M}n$ of 2.10 and a B value of 1.13. The activity was 9,000 g of polymer/milligram-atom of zirconium.

EXAMPLE 4

Example 1 was repeated except that bis(cyclopentadienyl) phenyl methoxy zirconium monochloride was used instead of bis(cyclopentadienyl) phenoxy zirconium monochloride. There was obtained 4.2 g of an ethylene/propylene copolymer having an ethylene content of 79.2 mole%, an MFR of 0.89 g/10 min., an $\overline{M}w/\overline{M}n$ of 2.22 and a B value of 1.11. The activity was 3,400 g of polymer/milligram-atom of zirconium.

EXAMPLE 5

The same polymerization as in Example 1 was carried out except that a gaseous mixture of ethylene and propylene (15 liters/hr and 85 liters/hr respectively) was passed through the autoclave, and bis-(cyclopentadienyl) phenoxy zirconium monochloride was used in an amount of 5 x $10^{-3}$ milligram-atom as the zirconium atom, and that the polymerization was carried out at 40°C. After the polymerization, the polymer solution was poured into aqueous hydrochloric acid solution to remove the catalyst residue. The polymer was washed with water several times and dried overnight under reduced pressure. There was obtained 9.5 g of a liquid ethylene/propylene copolymer having an ethylene content of 49.3 mole%, an intrinsic viscosity of 0.12 dl/g, an $\overline{M}w/\overline{M}n$ of 1.89 and a B value of 1.26. The activity was 1,900 g of polymer/milligram-atom of zirconium.

EXAMPLE 6

The same polymerization as in Example 1 was carried out except that toluene was not used, 250 ml of 1-hexene was used instead of the gaseous mixture of ethylene and propylene, 5 x $10^{-3}$ milligram-atom, as zirconium, of bis (cyclopentadienyl) thiophenyl zirconium monochloride was used as the catalyst component (A), and the polymerization was carried out at 50°C for 2 hours. The resulting polymer solution was worked up as in Example 5 to give 16.8 g of liquid 1-hexene homopolymer having an intrinsic viscosity of 0.04 dl/g and an $\overline{M}w/\overline{M}n$ of 2.01. The activity was 3,360 g of polymer/milligram-atom of zirconium.

Reference Example 1

Treatment of a catalyst component (A) (zirconium catalyst):-

A 200 ml glass flask purged fully with nitrogen was charged with 50 ml of a toluene solution of bis-(cyclopentadienyl) ethoxy zirconium monochloride (Zr 1.35 millimoles/liter) and 34 ml of dimethyl aluminum chloride (Al 4 millimoles/liter), and the mixture was reacted at 25°C for 0.5 hour to obtain a catalyst component (A).

Polymerization:-

Purified toluene (250 ml) was charged into a 500 ml glass autoclave purged fully with nitrogen, and a gaseous mixture of ethylene and propylene (60 liters/hr and 40 liters/hr respectively) was passed through the autoclave and maintained at 20°C for 10 minutes. Subsequently, 1.25 milligram-atom, as the aluminum atom, of methylaluminoxane [catalyst component (B)] and 2.5 x $10^{-4}$ milligram-atom, as the zirconium atom, of the catalyst component (A) synthesized above were introduced into the autoclave, and the polymerization of the ethylene/propylene gaseous mixture was started. The polymerization was carried out at 20°C under atmospheric pressure for 0.5 hour, and then stopped by adding a small amount of isopropanol. The polymer solution was poured into a large amount of methanol to precipitate the polymer. The polymer was dried overnight at 130°C under reduced pressure. After drying, the amount of the polymer obtained was 5.7 g. The activity was 22,800 g of polymer/milligram-atom of zirconium. The resulting ethylene/propylene copolymer had an ethylene content of 83.1 mole%, an MFR of 0.38 g/10 min., an $\overline{M}w/\overline{M}n$ of 1.96 and a B value of 1.16.

Reference Example 2

Reference Example 1 was repeated except that in the polymerization, 175 ml of toluene and 75 ml of 1-hexene were introduced into the autoclave, and while ethylene was passed through the autoclave at a rate of 100 liters/hr, 1.25 x $10^{-3}$ milligram-atom, as the zirconium atom, of the catalyst component (A) was added. There was obtained 10.6 g of an ethylene/1-hexene copolymer having an ethylene content of 80.3 mole%, an MFR of 2.94 g/10 min., an $\overline{M}w/\overline{M}n$ of 1.84 and a B value of 1.21. The activity was 8,500 g of polymer/milligram-atom of zirconium.

Example 7

Treatment of a catalyst component (A):-

Reference Example 1 was carried out except that bis(cyclopentadienyl) phenoxy zirconium chloride was used instead of bis(cyclopentadienyl) ethoxy zirconium monochloride to prepare a catalyst comonent (A).

Polymerization:-

The same polymerization as in Reference Example 1 was carried out except that the catalyst component (A) prepared above was used instead of the catalyst component (A) used in Reference Example 1. There was obtained 6.0 g of an ethylene/propylene copolymer having an ethylene content of 82.5 mole%, an MFR of 0.41 g/10 min., an $\overline{M}w/\overline{M}n$ of 2.00 and a B value of 1.16. The activity was 24,000 g of polymer/milligram-atom of zirconium.

EXAMPLE 8

Treatment of a catalyst component (A):-

Reference Example 1 was repeated except that bis(cyclopentadienyl) thiophenyl zirconium monochloride was used instead of bis(cyclopentadienyl) ethoxy zirconium monochloride to prepare a catalyst component (A).

Polymerization:-

The same polymerization as in Reference Example 2 was carried out except that the catalyst component (A) prepared above was used instead of the catalyst component (A) used in Reference Example 2. There was obtained 9.5 g of an ethylene/1-hexene copolymer having an ethylene content of 81.5 mole%, an MFR of 2.50 g/10 min., an $\overline{M}w/\overline{M}n$ of 1.90 and a B value of 1.19. The activity was 7,600 g of polymer/milligram-atom of zirconium.

The transition metal compounds (A) used in the foregoing Examples were prepared as follows:-

(1) Synthesis of bis(cyclopentadienyl) phenoxy zirconium monochloride (this compound was used in Examples 1, 2, 5 and 7):

In 80 ml of toluene was dissolved 1.05 g of bis(cyclopentadienyl) zirconium dichloride, and 0.63 ml of phenol was added to the solution. Subsequently, 8.6 ml of triethylamine (1.0 mole/liter) diluted with toluene was added dropwise with stirring. At this time, triethylamine-HCl adduct precipitated. After the addition, the temperature was elevated to 60°C and at this temperature, the reaction was carried out for 1 hour. After the reaction, the precipitated triethylamine-HCl adduct was removed by filtration, and toluene was removed from the filtrate by using an evaporator. The resulting solid was again dissolved in 10 ml of toluene, and 25 ml of hexane was added to the solution. The solution was cooled to -60°C. By this operation, a solid precipitated. The solid portion was separated by filtration, and washed with 25 ml of hexane to obtain the above-compound (1).

(2) Synthesis of bis(cyclopentadienyl) thiophenyl zirconium chloride (this compound was used in Examples 3, 6 and 8):

The operation of synthesizing the compound (1) was almost similarly repeated except that 8.7 ml of thiophenol was used instead of 0.63 ml of phenol.

(3) Synthesis of bis(cyclopentadienyl) phenylmethoxy zirconium chloride (this compound was used in Example 4):-

The operation of synthesizing the compound (1) was almost similarly repeated except that 0.75 ml of benzyl alcohol was used instead of 0.63 ml of phenol.

(4) Synthesis of bis(cyclopentadienyl) ethoxy zirconium chloride (this compound was used in Reference Example 1):-

The operation of synthesizing the compound (1) was almost similarly repeated except that 7.3 ml of an ethanol/toluene mixture (1 mole ethanol/1 liter toluene) was used instead of 0.63 ml of phenol.

## Industrial utilizability

According to the process of this invention, a homopolymer of an alpha-olefin having a narrow molecular weight distribution, and an alpha-olefin copolymer having a narrow molecular weight distribution and a narrow composition distribution can be obtained.

## Claims

1. A catalyst for use in polymerizing an alpha-olefin, which comprises no carrier or support and is obtainable from

   (A) a transition metal compound represented by the following formula (I)

$$R^1{}_kR^2{}_lR^3{}_mR^4{}_nM \qquad (I)$$

   wherein M represents a titanium, zirconium or hafnium atom, $R^1$ represents a cycloalkadienyl group bonded to M through a conjugated $\pi$ electron thereof, $R^2$ is a group containing a heteroatom selected from O, S, N and P, through which the group is bonded to M, $R^2$ being selected from $OR^a$, $SR^b$, $NR^c{}_2$ or $PR^d{}_2$, $R^a$ represents a hydrogen atom, or a hydrocarbon group which is a cycloalkyl, aryl or aralkyl group, or a silyl group, $R^b$, $R^c$ and $R^d$ represent a hydrogen atom, or a hydrocarbon group which is an alkyl, cycloalkyl, aryl or aralkyl group, or a silyl group, or two $R^c$ groups or two $R^d$ groups may be linked to form a ring, $R^3$ and $R^4$ are identical or different and each represents a cycloalkadienyl group, an aryl group, an aralkyl group, an alkyl group, a halogen atom or a hydrogen atom, $1 \le k \le 3$, $1 \le l \le 2$, $0 \le m \le 2$, $0 \le n \le 2$, and $k+l+m+n=4$, and
   (B) an aluminoxane.

2. A catalyst according to claim 1 wherein said transition metal compound (A) has been pre-treated with (C) an organoaluminum compound which has at least one hydrocarbon group directly bonded to the aluminum atom selected from a trialkyl aluminum, alkenyl aluminium, dialkyl aluminum alkoxide, alkyl aluminum sesquialkoxide, partially alkoxylated alkyl aluminum having the average composition of the formula $R^1{}_{2.5}Al(OR^2)_{0.5}$ wherein $R^1$ and $R^2$ are alkyl groups, dialkyl aluminum halide, alkyl aluminum sesquihalide and alkyl aluminum dihalide.

3. A catalyst according to claim 1 wherein said transition metal compound (A) has been pre-treated with (D) a halogenated inorganic silicon compound.

4. A catalyst according to claim 1, wherein the aluminoxane (B) is a compound of the formula (II)

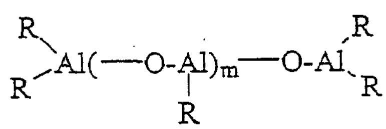

(II)

   wherein R represents a hydrocarbon group and m is a positive integer, or a compound of the formula (III)

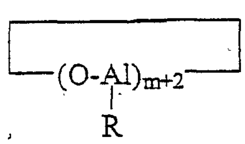

(III)

   wherein R and m are as defined above.

5. A process for producing an alpha-olefin polymer, which comprises polymerizing an alpha-olefin in the presence of a catalyst as claimed in any one of claims 1 to 4.

6. A process according to claim 5 wherein the alpha-olefin contains 2 to 20 carbon atoms.

7. A process according to claim 5 or 6 wherein the polymerization is carried out in the presence of a solvent.

**Patentansprüche**

1. Katalysator zur Verwendung bei der Polymerisation eines α-Olefins, der keinen Träger umfasst und erhältlich ist aus

(A) einer Übergangsmetallverbindung, die durch die folgende Formel (I) wiedergegeben wird

$$R^1{}_kR^2{}_lR^3{}_mR^4{}_nM \quad (I)$$

in der M ein Titan-, Zirkonium- oder Hafniumatom bedeutet, $R^1$ eine Cycloalkadienylgruppe bedeutet, die über ein konjugiertes π-Elektron davon an M gebunden ist, $R^2$ ist eine Gruppe, die ein Heteroatom enthält, ausgewählt aus O, S, N und P, über das die Gruppe mit M verbunden ist, $R^2$ ist ausgewählt aus $OR^a$, $SR^b$, $NR^c{}_2$ oder $PR^d{}_2$, $R^a$ steht für ein Wasserstoffatom oder eine Kohlenwasserstoffgruppe, die eine Cycloalkyl-, Aryl- oder Aralkylgruppe ist, oder eine Silylgruppe, $R^b$, $R^c$ und $R^d$ stehen für ein Wasserstoffatom oder eine Kohlenwasserstoffgruppe, die eine Alkyl-, Cycloalkyl- Aryloder Aralkylgruppe ist, oder eine Silylgruppe, oder zwei $R^c$-Gruppen oder zwei $R^d$-Gruppen sind unter Bildung eines Ringes miteinander verbunden, $R^3$ und $R^4$ sind gleich oder verschieden und stehen jeweils für eine Cycloalkadienylgruppe, eine Arylgruppe, eine Aralkylgruppe, eine Alkylgruppe, ein Halogenatom oder ein Wasserstoffatom, $1 \le k \le 3$, $1 \le l \le 2$, $0 \le m \le 2$, $0 \le n \le 2$ und $k+l+m+n=4$, und

(B) einem Aluminoxan.

2. Katalysator nach Anspruch 1, worin die Übergangsmetallverbindung (A) vorbehandelt wurde mit (C) einer Organoaluminiumverbindung, die mindestens eine Kohlenwasserstoffgruppe direkt gebunden an das Aluminiumatom hat, ausgewählt aus einem Trialkylaluminium, Alkenylaluminium, Dialkylaluminiumalkoxid, Alkylaluminiumsesquialkoxid, teilweise alkoxyliertem Alkylaluminium mit einer mittleren Zusammensetzung nach der Formel $R^1{}_{2,5}Al(OR^2)_{0,5}$, worin $R^1$ und $R^2$ Alkylgruppen sind, Dialkylaluminiumhalogenid, Alkylaluminiumsesquihalogenid und Alkylaluminiumdihalogenid.

3. Katalysator nach Anspruch 1, worin die Übergangsmetallverbindung (A) mit (D) einer halogenierten anorganischen Siliciumverbindung vorbehandelt wurde.

4. Katalysator nach Anspruch 1, worin das Aluminoxan (B) eine Verbindung der Formel (II) ist

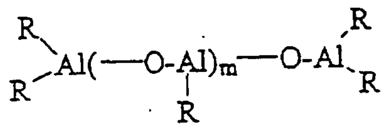
(II)

worin R für eine Kohlenwasserstoffgruppe steht und m ist eine positive ganze Zahl, oder eine Verbindung der Formel (III)

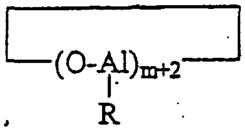
(III)

worin R und m wie zuvor definiert sind.

5. Verfahren zur Herstellung eines α-Olefinpolymers, umfassend die Polymerisierung eines α-Olefins in Gegenwart eines Katalysators wie in einem der Ansprüche 1 bis 4 beansprucht.

6. Verfahren nach Anspruch 5, worin das α-Olefin 2 bis 20 Kohlenstoffatome enthält.

7. Verfahren nach Anspruch 5 oder 6, worin die Polymerisierung in Gegenwart eines Lösemittels durchgeführt wird.

**Revendications**

1. Catalyseur pour utilisation dans la polymérisation d'une α-oléfine, qui ne comprend pas de support et peut être obtenu à partir de

(A) un composé contenant un métal de transition, représenté par la formule (I)

$$R^1{}_kR^2{}_lR^3{}_mR^4{}_nM \qquad (I)$$

dans laquelle M représente un atome de titane, zirconium ou hafnium, $R^1$ représente un groupe cycloalcadiényle lié à M par un électron π conjugué de celui-ci, $R^2$ est un groupe contenant un hétéroatome choisi parmi O, S, N et P, par lequel le groupe est lié à M, $R^2$ étant choisi parmi $OR^a$, $SR^b$, $NR^c{}_2$ et $PR^d{}_2$, $R^a$ représente un atome d'hydrogène, un groupe hydrocarboné qui est un groupe cycloalkyle, aryle ou aralkyle, ou un groupe silyle, $R^b$, $R^c$ et $R^d$ représentent un atome d'hydrogène, un groupe hydrocarboné qui est un groupe alkyle, cycloalkyle, aryle ou aralkyle, ou un groupe silyle, ou deux groupes $R^c$ ou deux groupes $R^d$ peuvent être liés pour former un cycle, $R^3$ et $R^4$ sont identiques ou différents et représentent chacun un groupe cycloalcadiényle, aryle, aralkyle, alkyle ou un atome d'hydrogène ou d'halogène, $1 \le k \le 3$, $1 \le l \le 2$, $0 \le m \le 2$, $0 \le n \le 2$ et $k+l+m+n = 4$, et

(B) un aluminoxane,

2. Catalyseur selon la revendication 1, dans lequel ledit composé (A) contenant un métal de transition a été prétraité par (C) un composé organoaluminique qui comporte au moins un groupe hydrocarboné lié directement à l'atome d'aluminium, choisi parmi un trialkylaluminium, un alcénylaluminium, un alcoolate de dialkylaluminium, un sesquialcoolate d'alkylaluminium, un alkylaluminium partiellement alcoxylé ayant la composition moyenne de formule $R^1{}_{2,5}Al(OR^2)_{0,5}$, dans laquelle $R^1$ et $R^2$ sont des groupes alkyle, un halogénure de dialkylaluminium, un sesquihalogénure d'alkylaluminium et un dihalogénure d'alkylaluminium.

3. Catalyseur selon la revendication 1, dans lequel ledit composé (A) contenant un métal de transition a été prétraité par (D) un composé silicié minéral halogéné.

4. Catalyseur selon la revendication 1, dans lequel l'aluminoxane (B) est un composé de formule (II)

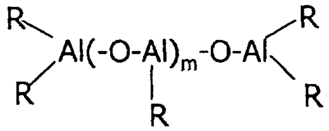

(II)

dans laquelle R représente un groupe hydrocarboné et m est un nombre entier positif, ou un composé de formule (III)

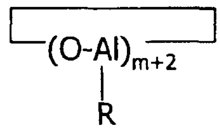 (III)

dans laquelle R et m sont tels que définis ci-dessus.

**5.** Procédé pour la préparation d'un polymère d'α-oléfine, comprenant la polymérisation d'une α-oléfine en présence d'un catalyseur selon l'une quelconque des revendications 1 à 4.

**6.** Procédé selon la revendication 5, dans lequel l'α-oléfine comporte de 2 à 20 atomes de carbone.

**7.** Procédé selon la revendication 5 ou 6, dans lequel la polymérisation est effectuée en présence d'un solvant.